# EUROPEAN PATENT SPECIFICATION

(11) **EP 0 689 897 B1**
(45) Date of publication and mention of the grant of the patent: **23.09.1998**
(21) Application number: 95304578.8
(22) Date of filing: 29.06.1995
(51) Int. Cl.: B23K 37/04, B23Q 3/06

(54) **Method for welding aluminium plates**
Verfahren zum Schweissen von Aluminiumblechen
Méthode de soudage de tôles d'aluminium

(30) Priority: 01.07.1994 FI 943158
(43) Date of publication of application: 03.01.1996
(73) Proprietor: KVAERNER MASA-YARDS OY, 00150 Helsinki (FI)
(72) Inventor: Gustafsson, Jukka, FIN-23100 Mynämäki (FI); Heino, Kalevi, FIN-20110 Turku (FI)
(74) Representative: Newby, Martin John

(56) References cited:
- EP-A- 0 092 533
- EP-A- 0 570 212
- FR-A- 2 495 734
- FR-A- 2 673 554
- US-A- 4 832 322
- US-A- 5 010 226
- US-A- 5 307 979
- PATENT ABSTRACTS OF JAPAN vol. 6 no. 97 (M-134) ,5 June 1982 & JP-A-57 032896 (MITSUBISHI HEAVY IND LTD) 22 February 1982,

## Description

This invention relates to a method according to the preamble of claim 1 and to a method for manufacturing a large basically spherical vessel from plane aluminium plates. In particular, but not exclusively, the invention is intended for welding together aluminium plates for manufacturing a spherical LNG-tank.

The manufacture of vessel-born tanks for liquified natural gas (LNG) includes welding together large and thick aluminium plates which are shaped to form the spherical LNG-tank. Similar tanks may be used in places other than on vessels for storing LNG or other substances. Because a large proportion of the manufacturing costs are the welding costs, it is cost advantageous for the plate blanks welded together to be as large as possible. However joining together such large plate blanks and so formed welded plate assemblies by further welding is demanding work, since all the weld joints must be of high quality. Furthermore the plates and the plate assemblies must be made to a high tolerance with regard to their shape and dimension to achieve a proper final result.

EP-A-0570212 relates to the manufacture of large spherical LNG-tanks of welded together aluminium plates and discloses welding together several flat or plane plates, subsequently forming the welded plate assembly in a mould into a part-spherical shape and using the formed plate assembly in the following stage of manufacture. However, during forming of the plate assembly in the mould, the plate assembly stretches somewhat. This makes it difficult subsequently to use modern, high power, MIG-welding equipment for welding in one pass per side because there are shape defects in the welding groove and at its root.

It is also known to manufacture spherical tanks of plates which are welded together by a so-called tractor type welding carriage to form larger plate assemblies. However, difficulties and waste of time occur, especially at the start and finish of the welding process, when using this kind of equipment. Known manufacturing methods for welding preformed plates together with tractor type welding equipment also require double the number of assembly stations. Since removal of the weld reinforcement before forming is necessary because of the inspections included in many methods and because of the forming itself, special attention has to be given to the automation of the work and to the dimensional precision of the final work.

A downhand welding technique for welding together curved plates of a rotationally symmetric concrete mixing drum is disclosed in US-A-4832322.

An object of the invention is to achieve a high level of automation in the manufacture of welded structures, for example curved structures such as large spherical LNG-tanks, and to improve the quality of both the welds and the manufactured structure, e.g. a spherical tank.

According to one aspect of the invention, this object is achieved by a method as claimed in the ensuing claim 1.

A large spherical LNG-tank or the like has a diameter of at least 20 metres, may be even more than 40 metres. It can be manufactured according to the invention from aluminium plates typically having a thickness of from 20 mm to 70 mm. The plates to be welded together are conveniently held in a fixed position during welding by jigs and suction fastening devices.

The plate means are suitably formed by welding plane plates together by using manipulating means mounted on an adjustable overhead frame which can be locked in an adjusted position. The manipulating means conveniently comprises, in addition to welding equipment, a device for scraping or brushing the weld groove prior to welding for removing impurities and any oxide layer on the aluminium. Removal of the oxide layer reduces the risks of subsequent welding defects. The groove brushing device moves along the weld groove in front of the welding device, most suitably at a distance of about half a metre from the welding device. The manipulating means may also be provided with cutting means, e.g. a milling cutter, for removing the weld reinforcement so that the welded joint is made substantially flush with the welded together plates. The cutter moves along the weld groove behind the welding device and removes the weld reinforcement immediately after the formation of the weld. Because the cutter is a part of the manipulating means, the repeatability of the cutting is excellent, accurate and fast.

Suitably the welded together plates forming the plate means are plasma cut to a size and shape suitable for the structure, e.g. a spherical LNG-tank, being manufactured. However a working allowance is made because the edges of the plate means for the subsequent welding stage are made by a form milling cutter. Accurate forming of the groove and the production of smooth groove surfaces are important for achieving compatible plate edge surfaces to be joined which are required for producing a good finished weld.

Two plate means bent to a curved or spherical shape are suitably joined together with a flat butt weld using a manipulator device and the tilting support structure. The curved structure, e.g. a spherical LNG-tank, to be manufactured may be assembled from large sections at the final assembly site.

The metallic, preferably aluminium, plates are conveniently welded together with the use of a manipulator device with only one pass per side irrespective of material thickness. For this purpose, a high power welding device may be used. Fastening and turning equipment is provided for turning the plate means upside down to enable both sides of a joint to be welded using a downhand welding technique. To speed up the work, it is of advantage to use a production line having the turning equipment located between two manipulator devices.

In order to weld plane plates to form larger plate means or assemblies, a suction fastening device holding the plane plates is tilted so that the groove at the welding point is inclined upwards in the welding direction by from 4° to 7°, preferably about 5°. It is then possible to use a high power welding device and to complete the weld joint on one side in one pass, because full control of the melt is easily achieved when the weld groove is slightly upwardly inclined.

The plate means or assemblies bent to a curved or part-spherical shape for subsequent welding together are supported on the tiltable support structure by means of which the inclination of the plate assemblies at the welding point is set to a value of from 4° to 7°, preferably about 5°, upwards in the welding direction. Since the welding groove is curved in a vertical plane, this is achieved by continuously adjusting the angle of tilt of the tiltable table during welding. This makes it possible to use high power welding equipment and to complete the weld joint on one side in one pass for the reasons mentioned above.

It is of advantage to support at least two plate means of part-spherical shape by a support device substantially in the shape of a circular ring. In this case either the convex side or the concave side of the part-spherical shape may face upwards during the welding. The circular ring should be dimensioned so that its diameter is as large as possible for achieving a good support of the plate means, but sufficiently small that the plate means totally cover it. It is also possible to use a known suction fastening device with suction heads which face the plate means and which are easily adjustable. The vertical position of the suction heads can thus be adjusted to support from below either the convex or the concave surface of the plate means.

The height of the support structure in the central region of the support assembly is adjustable depending on whether the plate means to be welded are positioned with their concave or convex sides upwards. According to a preferred embodiment, the support structure in the central region of the circular ring comprises a small circular ring with a diameter of , for example, approximately 1250 mm, the height of which is adjustable so that it supports either the convex or the concave side of the plate means. Another method of support is to provide, in the central area of the circular ring, an upwardly convex general support preferably having a part-spherical shape. The support is adjusted to a suitable height for supporting the plate means to be welded. For welding upwardly concave plate means, an upwardly concave intermediate structure may be arranged, in the central support area, to support with its top the central area of the plate means.

The weldable edges of the metallic, preferably aluminium, plate and/or plate means are prepared by a form milling cutter that simultaneously cuts to shape both the root portion and the sides of the groove. Conveniently, a cylindrical disc cutter having a relatively large diameter can be used. It is important that the disc cutter moves along such a line and at such an angle to the plate/plate means that a weld root surface is produced which allows easy positioning of one plate/plate means against another with substantially no slot or gap between adjacent root surfaces. If irregularities occur, a slot or gap of about 1 mm between the root surface may be acceptable.

Further aspects of the invention are disclosed by the methods disclosed in claims 18 and 19.

An embodiment of the invention will be described by way of example only, with particular reference to the accompanying drawings, in which:
Figure 1 schematically illustrates manufacturing equipment for joining together substantially planar plates to form plate means or assemblies;
Figure 2 schematically illustrates manufacturing equipment for joining together curved or part-spherical plate assemblies;
Figure 3 schematically illustrates fastening and support equipment for welding together part-spherical plate means or assemblies; and
Figure 4 schematically illustrates accessories of a manipulator device.

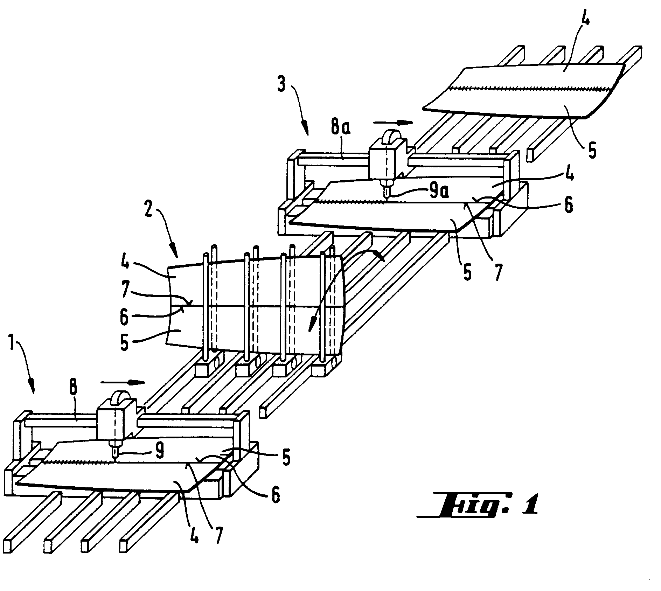

In Figure 1 there is shown a production line for joining together substantially flat or plane plates to form plate means or assemblies, the production line including first and second downhand welding and manipulating devices at stations 1 and 3 and a plate assembly turnover device at station 2. At station 1, plane plates 4 and 5, already cut to a desired, slightly tapered shape, are joined together by welding to form a plate assembly. The edges 6 and 7 of the plates 5 and 4, respectively, which are to be welded together have been machined by a cylindrical cutter to form a weld groove with root surfaces. A welding device 9 is mounted on an overhead cross beam 8 of a portal frame for movement transversely of the direction of the production line. The cross beam 8 is inclined at an angle of from 4° to 7°, typically 5°. This inclination is adjustable and the cross beam can be locked in its inclined position so that the weld groove is upwardly inclined in the direction of welding.

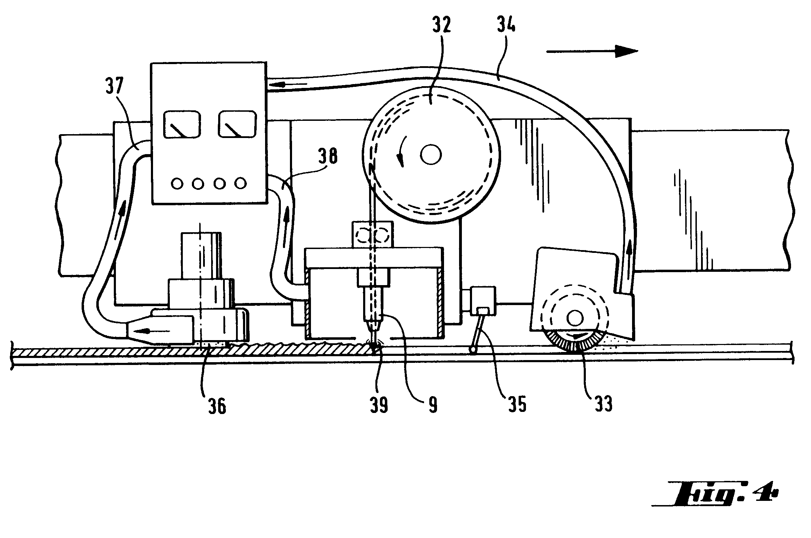

A suction fastening device (not shown in detail) is arranged beneath the cross beam 8 for holding the plates 4 and 5 firmly in place during welding. The suction fastening device is also inclined or tilted so that the weld groove between the edges to be welded together is parallel to the cross beam 8 of the portal frame during welding. Other parts of the welding equipment are shown in more detail in Figure 4 described hereinafter.

In order to weld both sides of the plate assembly, the latter, after being downhand welded at station 1, is turned upside down in station 2 and is passed to station 3. The second welding and manipulating device at station 3 includes a cross beam 8a of a portal frame 8 and a downhand welding device 9a each of the same kind as at station 1. Instead of welding the second side of the plane plates 4 and 5 at station 3, it is also possible to exclude station 3 and to weld both sides of the plate assembly 4, 5 at station 1, e.g. by returning the plate assembly to station 1 after turning the plate assembly upside down in station 2.

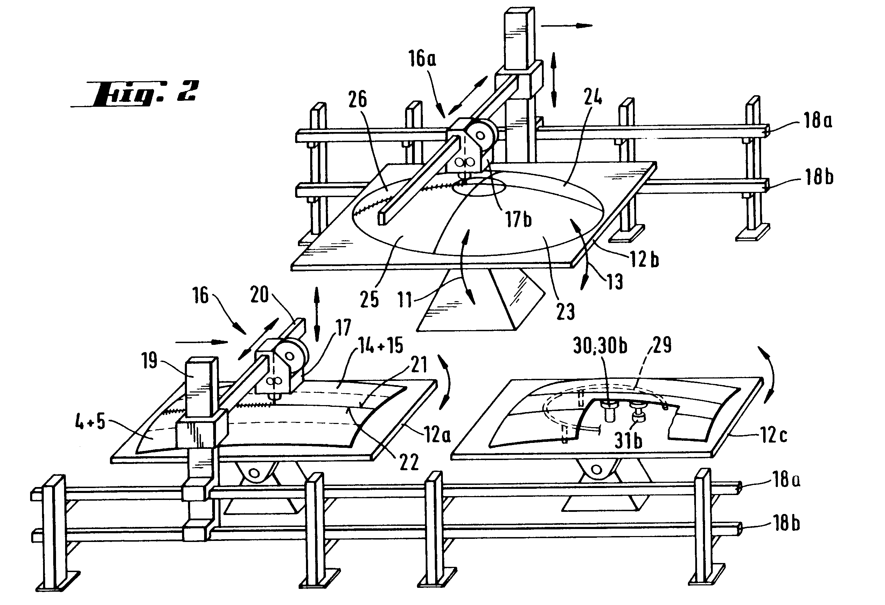

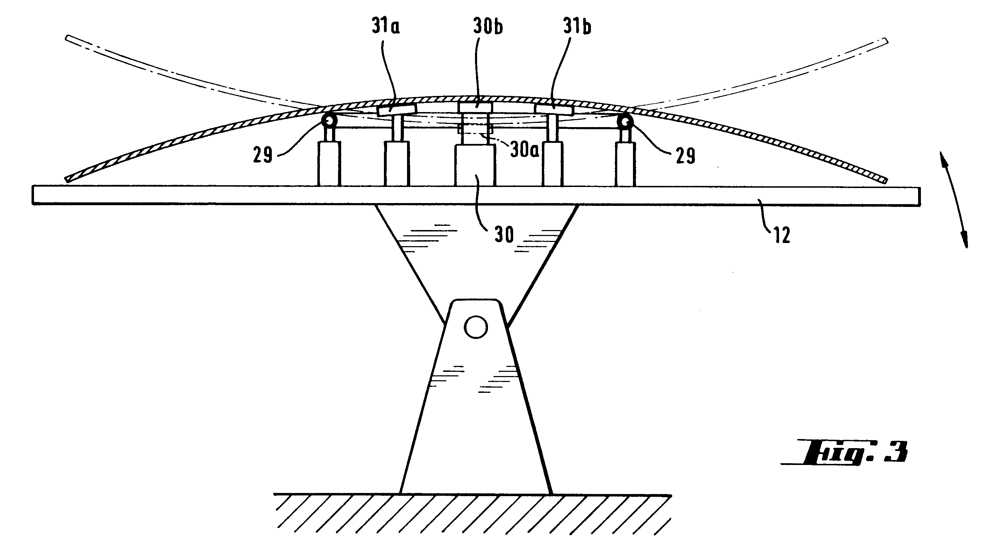

Figure 2 shows three embodiments 12a, 12b and 12c of a tiltable welding table including plate assembly support and fastening equipment (shown in more detail in Figure 3) The table 12a is used to weld together a first plate assembly, consisting of the two welded together plates 4 and 5, which has conveniently been cut to shape and then bent into a part-spherical shape and a similar second plate assembly consisting of welded together plates 14 and 15 and also having conveniently been cut to shape and then bent into a part-spherical shape. The edges of the plate assemblies to be joined together may be cut to shape, e.g. bevelled with a milling cutter. To enable welding of these edges, a welding device 17 is carried by a manipulator device 16 which allows movement of the welding device 17 in mutually exclusive directions perpendicular to each other. In particular, the manipulator device 16 comprises a horizontal beam 20 along which the welding device can move horizontally, a pillar 19 carrying the beam 20 for vertical movement of the latter and horizontal guides 18a and 18b for horizontal movement of the pillar 19. The plate assembly formed of the plates 4, 5, 14 and 15 is placed on the table 12a which is tiltable at least ± 20°, preferably at least ± 30°, from its horizontal position.

The plate assembly 4, 5, 14 and 15 is releasably fixed on the table 12a by means of suction fastening equipment. The curved weld groove formed by plate assembly edges 21 and 22 is arranged to lie in a vertical plane parallel to the guides 18a and 18b. During welding the tilt or inclination of the table 12a is continuously adjusted about an axis perpendicular to this vertical plane so that welding always takes part in a portion of the curved weld groove inclined, for example, at an angle of from 4° to 7°, typically about 5°, upwards. In particular the orientation of the table 12a is adjusted during welding so that the tangent to the curved or arcuate weld groove at the welding location is inclined to the horizontal at an angle of from 4° to 7°. The pillar 19 moves along the guides 18a and 18b as welding progresses along the weld groove. Should there be a discrepancy in the parallelity between the guides 18a and 18b and the weld groove, correction is made by moving the welding device 17 on the beam 20. The distance of the welding device 17 from the welding groove is adjusted by moving the beam 20 vertically up and down the pillar 19.

The manipulator device 16 is preferably equipped with a device for removing weld smoke, with groove cleaning devices for cleaning the weld groove upstream of the welding device and with a milling device for removing the weld reinforcement so that the weld joint can be made flush with the surfaces of the joined together plate assemblies. It is also possible to provide quality monitoring devices for monitoring the quality of the weld joint.

The tiltable table 12b differs from the table 12a in that it has two cross-wise arranged tilting axes allowing tilting about perpendicular horizontal axes as indicated by arrows 11 and 13. The table 12b is intended in particular for supporting plate assemblies forming upper and lower "calottes" of a spherical tank having plate portions 23, 24, 25 and 26. The welding device 17b of the table 12b has the same degrees of movement as the device 17. However, the two tilting axes of the table 12b make it possible for all welds to be carried out without having to release the fixation of the workpiece.

The table 12c is an alternative to the table 12a, the pieces to be welded on table 12c being intended to be welded by the welding device 17. Support and fastening means for holding the concave or convex side of a part-spherical workpiece are indicated by numerals 29, 30, 30b and 31b (see Figures 2 and 3). The main support member comprises a circular ring 29, the diameter of which may typically be about 10 m when manufacturing portions of a spherical tank having a diameter of about 40 m. At the centre of the support ring 29, there is a support 30, including a support member 30b which is used during welding the convex side of a plate assembly (see full lines in Figure 3). A corresponding lower support 30a is used when the concave side (see chain lines in Figure 3) of the plate assembly is to be welded. Vertically adjustable suction fastening devices 31a, 31b are used for pulling the plate assembly towards, and holding it against, the support ring 29. As an alternative to the central support structure 30a, 30b, another annular support, of smaller diameter than the ring 29, may be used. Such a support should also be vertically adjustable to conform to the concavity or convexity of the plates to be supported.

Figure 4 shows accessories of a welding device 9, for instance a high power MIG-welding device, using welding wire provided from a roll 32 for depositing weld metal into the welding groove at a welding location. In particular, there is provided a cleaning device in the form of a rotating brush 33 for cleaning the groove of impurities and harmful particles. Matter removed by the brush 33 is sucked into a pipe 34, in which an air flow is maintained for removing such matter. A groove sensor device 35 is arranged between the brush 33 and the welding device. A cutter 36 is provided for removing the weld reinforcement, formed during welding and extending above the surfaces of the plates welded together, the cutting chips being sucked away through a pipe 37. A similar suction pipe 38 removes weld smoke produced at the welding point 39.

The plate thickness of a spherical tank manufactured by the method described is, as a rule, between from 20 to 70 mm, thinner plates being used in the upper regions of the tank. The weld groove suitably includes double, symmetrically positioned V-grooves with root faces. The root area typically takes up from 40% to 50% of the plate thickness. The groove angle varies from approximately 90° for thinner plates to approximately 70° for thicker plates.

The invention is not restricted to the embodiments shown, but several modifications thereof are feasible within the scope of the ensuing claims.

## Claims

1. A method of manufacturing a structure of welded together metallic, e.g. aluminium, plates (4,5), comprising supporting two curved metallic plate means on a tiltable support structure (12a) with two plate edges (21,22) of the plate means adjacent each other, defining a curved welding groove with a changing inclination along its length and joining the two plate edges together by welding involving moving a welding device (17) along said welding groove, characterized in that said welding together of the two plate edges is carried out by downhand welding that involves tilting the support structure (12a) to provide a substantially constant inclination of the curved welding groove at the position of the welding device (17) as the latter is moved along the welding groove.

2. A method according to claim 1, characterised in that each plate means is formed by welding together substantially flat metallic plates (4,5) by downhand welding using welding means (9,9a) moving along a weld groove and in that the plate means are subsequently bent into a curved form before being joined together.

3. A method according to claim 2, characterised in that each of the plate means (4,5;14,15) is cut to a desired shape before being bent into its curved form.

4. A method according to claim 2 or 3, characterised in that said downhand welding together of said plates is performed by said welding means (9,9a) being movably mounted on an overhead transverse frame (8) having an adjustable inclination.

5. A method according to any of claims 2 to 4, characterised in that prior to welding the plates together to form each plate means, said weld groove between the plates is cleaned by brushing.

6. A method according to claim 5, characterised in that said brushing is provided by a brushing device (33) which moves along the weld groove in front of said welding means (9), preferably at a distance of about half a metre from the welding means.

7. A method according to any of claims 2 to 6, characterised in that after welding the plates together to form said plate means the welds so created are milled to remove weld reinforcements.

8. A method according to claim 7, characterised in that the milling is provided by a milling cutter (36) moving in the direction of the weld behind the welding means (9).

9. A method according to any of claims 2 to 8, characterised in that each plate means (4,5) is formed by welding said plates together in one pass on one side, turning the plate means over and welding the plates in one pass on the other side.

10. A method according to any of claims 2 to 9, characterised in that in the formation of each plate means a suction fastening device holds the plates and is tilted so that the weld groove at the welding point is orientated upwards relative to horizontal plane at an angle of from 4° to 7°, preferably about 5°, in the welding direction.

11. A method according to any of the preceding claims, characterised in that said plate edges (21,22) are cut, e.g. machined, prior to being joined together to enable formation of an accurate welding groove.

12. A method according to any of the preceding claims, characterised in that said tiltable support structure (12a) includes a tiltable table carrying the plate means to be welded together and which is tilted during welding so as to orientate the welding groove between the plate edges being welded together at the welding point to an upwards inclination of from 4° to 7°, preferably about 5°, in the direction of welding.

13. A method according to claim 12, characterised in that the plate means are supported on the tiltable table by an annular member (29) allowing support of either a convex side or a concave side of the plate means.

14. A method according to claim 13, characterised in that an additional support structure (30a,30b) is provided centrally of the annular support member (29) and includes means for adjusting its height position.

15. A method according to any of the preceding claims, characterised in that, prior to joining the plate means together, the edges (21,22) of the plate means to be welded are finished to create said plate edges by removing the machining allowance by a form milling cutter, which simultaneously forms edges for providing both the root surface of the weld and the sides of the welding groove.

16. A method according to any of claims 1 to 14, characterised in that the said plate edges (21,22) are bevelled.

17. A method according to any one of the preceding claims, characterised in that said structure comprises a large, spherical LNG-tank.

18. A method for manufacturing a large basically spherical vessel from plane aluminum plates having a thickness in the range of from about 20 mm to about 70 mm, comprising:
(a) forming at least first and second plane plate assemblies by downhand welding together plane plates (4,5; 14,15) by a welding device (9) movably mounted on an overhead frame (8) having an adjustable inclination;
(b) cutting each welded plane plate assembly to a peripheral shape that fits into the structural pattern of the vessel except for an allowance for machining in step (d);
(c) bending each plate assembly to a part-spherical configuration;
(d) machining respective edges (21,22) of the first and second bent plate assemblies to a profile suitable for welding in step (f);
(e) positioning on a tiltable support (12a) the first and second bent plate assemblies to meet at their machined edges (21,22) along a curved welding groove; and
(f) downhand welding the first and second bent plate assemblies together along said welding groove while adjusting the orientation of the bent plate assemblies by adjusting the tilt of the tiltable support (12a) to provide a substantially constant inclination of the curved welding groove at the location of welding as the welding progresses along the welding groove.

19. A method for manufacturing a large spherically curved structure from plane aluminum plates having a thickness in the range of from about 20 mm to about 70 mm, comprising:
(a)
(i) forming a first plane plate assembly by positioning two plane plates (4,5) to meet in edge-to-edge relationship along a line that is inclined to the horizontal and downhand welding together the plane plates (4,5) in an upward direction along the line at which they meet;
(ii) forming a second plane plate assembly by positioning two further plane plates (14,15) to meet in edge-to-edge relationship along a line that is inclined to the horizontal and downhand welding together said further plane plates in an upward direction along the line at which they meet;
(b) cutting each plane plate assembly to a peripheral shape that fits into the structural pattern of the spherically curved structure except for an allowance for machining in step (d);
(c) bending each plane plate assembly to a part-spherical configuration;
(d) machining respective edges (21,22) of the first and second bent plate assemblies to a profile suitable for welding in step (f);
(e) positioning the first and second bent plate assemblies to meet at their machined edges (21,22) along an arcuate line that extends upward from a first end of the line in a direction toward a second end of the arcuate line; and
(f) downhand welding the first and second bent plate assemblies together in said direction along the arcuate line from the first end of the arcuate line to the second end thereof, whereby the location of welding advances along the arcuate line, while adjusting the orientation of the bent plate assemblies such that as the location of welding changes, the tangent to the arcuate line at the location of welding remains inclined to the horizontal.

## Patentansprüche

1. Verfahren zur Herstellung einer Konstruktion aus miteinander verschweißten Metallblechen, z.B. Aluminiumblechen, (4, 5), bei dem man zwei gekrümmte Metallblechmittel auf einer kippbaren Stützstruktur (12a) mit zwei Blechrändern (21, 22) der Blechmittel nebeneinander abstützt, eine gekrümmte Schweißfuge mit sich über ihre Länge ändernder Neigung definiert und die beiden Blechränder durch Schweißen zusammenfügt, wobei man eine Schweißvorrichtung (17) entlang der Schweißfuge bewegt, dadurch gekennzeichnet, daß das Miteinanderverschweißen der beiden Blechränder durch Normallagenschweißen ausgeführt wird, bei dem man die Stützstruktur (12a) so kippt, daß eine im wesentlichen konstante Neigung der gekrümmten Schweißfuge an der Position der Schweißvorrichtung (17), während letztere entlang der Schweißfuge bewegt wird, bereitgestellt wird.

2. Verfahren nach Anspruch 1, dadurch gekennzeichnet, daß jedes Blechmittel durch Miteinanderverschweißen im wesentlichen flacher Metallbleche (4, 5) durch Normallagenschweißen unter Verwendung von sich entlang einer Schweißfuge bewegenden Schweißmitteln (9, 9a) gebildet wird, und daß die Blechmittel anschließend vor dem Zusammenfügen in eine gekrümmte Form gebogen werden.

3. Verfahren nach Anspruch 2, dadurch gekennzeichnet, daß jedes der Blechmittel (4,5; 14,15) vor dem Biegen in seine gekrümmte Form zu einer gewünschten Gestalt geschnitten wird.

4. Verfahren nach Anspruch 2 oder 3, dadurch gekennzeichnet, daß das Miteinanderschweißen der Bleche durch Normallagenschweißen dadurch ausgeführt wird, daß die Schweißmittel (9, 9a) an einem Portalquerrahmen (8) mit verstellbarer Neigung beweglich angebracht sind.

5. Verfahren nach einem der Ansprüche 2 bis 4, dadurch gekennzeichnet, daß die Schweißfuge zwischen den Blechen vor dem Miteinanderverschweißen der Bleche zur Bildung jedes Blechmittels durch Abbürsten gereinigt wird.

6. Verfahren nach Anspruch 5, dadurch gekennzeichnet, daß das Abbürsten durch eine Bürstvorrichtung (33) erfolgt, die sich vorzugsweise in einem Abstanbd von ca. einem halben Meter zu dem Schweißmittel (9) vor letzterem entlang der Schweißfuge bewegt.

7. Verfahren nach einem der Ansprüche 2 bis 6, dadurch gekennzeichnet, daß nach dem Miteinanderverschweißen der Bleche zur Bildung des Blechmittels die so gebildeten Schweißnähte gefräst werden, um Schweißwülste zu entfernen.

8. Verfahren nach Anspruch 7, dadurch gekennzeichnet daß das Fräsen durch ein Fräswerkzeug (36) erfolgt, das sich in Richtung der Schweißnaht hinter dem Schweißmittel (9) bewegt.

9. Verfahren nach einem der Ansprüche 2 bis 8, dadurch gekennzeichnet, daß jedes Blechmittel (4, 5) durch Miteinanderverschweißen der Bleche in einem Durchlauf auf einer Seite, Umdrehen der Blechmittel und Miteinanderverschweißen der Bleche in einem Durchlauf auf der anderen Seite gebildet wird.

10. Verfahren nach einem der Ansprüche 2 bis 9, dadurch gekennzeichnet, daß bei der Bildung jedes Blechmittels eine Saugbefestigungsvorrichtung die Bleche festhält und so gekippt wird, daß die Schweißfuge an der Schweißstelle bezüglich der Horizontalebene in einem Winkel von 4° bis 7°, vorzugsweise ca. 5°, in der Schweißrichtung nach oben ausgerichtet wird.

11. Verfahren nach einem der vorhergehenden Ansprüche, dadurch gekennzeichnet, daß die Blechränder (21, 22) vor dem Zusammenfügen geschnitten, z.B. maschinell bearbeitet, werden, um die Bildung einer genauen Schweißfuge zu ermöglichen.

12. Verfahren nach einem der vorhergehenden Ansprüche, dadurch gekennzeichnet, daß die kippbare Stützstruktur (12a) einen kippbaren Tisch enthält, der die miteinander zu verschweißenden Blechmittel trägt und beim Schweißen so gekippt wird, daß die Schweißfuge zwischen den gerade zusammengeschweißten Blechrändern an der Schweißstelle in einer Aufwärtsneigung von 4° bis 7°, vorzugsweise ca. 5°, in der Schweißrichtung ausgerichtet wird.

13. Verfahren nach Anspruch 12, dadurch gekennzeichnet, daß die Blechmittel durch ein ringförmiges Glied (29), das eine Abstützung entweder einer konvexen Seite oder einer konkaven Seite der Blechmittel gestattet, gestützt werden.

14. Verfahren nach Anspruch 13, dadurch gekennzeichnet, daß eine zusätzliche Stützstruktur (30a, 30b) in der Mitte des ringförmigen Stützglieds (29) vorgesehen ist und Mittel zur Einstellung ihrer Höhenposition enthält.

15. Verfahren nach einem der vorhergehenden Ansprüche, dadurch gekennzeichnet, daß, vor dem Zusammenfügen der Blechmittel, die Ränder (21, 22) der miteinander zu verschweißenden Blechmittel zur Herstellung der Blechränder fertigbearbeitet werden, indem die Bearbeitungstoleranz durch ein Formfräswerkzeug entfernt wird, das gleichzeitig Ränder zur Bereitstellung der Wurzelfläche der Schweißnaht und der Seiten der Schweißfuge bildet.

16. Verfahren nach einem der Ansprüche 1 bis 14, dadurch gekennzeichnet, daß die Blechränder (21, 22) abgeschrägt sind.

17. Verfahren nach einem der vorhergehenden Ansprüche, dadurch gekennzeichnet, daß die Konstruktion einen großen, kugelförmigen LNG-Tank umfaßt.

18. Verfahren zur Herstellung eines großen, im wesentlichen kugelförmigen Behältnisses aus ebenen Aluminiumblechen mit einer Dicke in einem Bereich von ca. 20 mm bis ca. 70 mm, bei dem man
(a) durch Miteinanderverschweißen ebener Bleche (4, 5; 14, 15) durch Normallagenschweißen mittels einer Schweißvorrichtung (9), die an einem Portalrahmen (8) mit verstellbarer Neigung beweglich angebracht ist, mindestens eine erste und zweite ebene Blechanordnung herstellt;
(b) jede geschweißte ebene Blechanordnung zu einer Umfangsgestalt schneidet, die in das strukturelle Muster des Behältnisses paßt, mit Ausnahme einer Toleranz zur Bearbeitung in Schritt (d);
(c) jede Blechanordnung in eine teilkugelförmige Konfiguration biegt;
(d) jeweilige Ränder (21, 22) der ersten und der zweiten gebogenen Blechanordnung maschinell zu einem Profil bearbeitet, das sich für das Schweißen in Schritt (f) eignet;
(e) die erste und die zweite gebogene Blechanordnung so auf einer kippbaren Stütze (12a) positioniert, daß sie sich an ihren maschinell bearbeiteten Rändern (21, 22) entlang einer gekrümmten Schweißfuge treffen; und
(f) die erste und die zweite gebogene Blechanordnung durch Normallagenschweißen entlang der Schweißfuge miteinander verschweißt, während die Ausrichtung der gebogenen Blechanordnungen durch Einstellen der Kippstellung der kippbaren Stütze (12a) so eingestellt wird, daß während des Fortgangs des Schweißvorgangs entlang der Schweißfuge an der Schweißstelle eine im wesentlichen konstante Neigung der gekrümmten Schweißfuge bereitgestellt wird.

19. Verfahren zur Herstellung einer großen kugelförmigen gekrümmten Konstruktion aus ebenen Aluminiumblechen mit einer Dicke in einem Bereich von ca. 20 mm bis ca. 70 mm, bei dem man
(a)
(i) durch derartiges Positionieren zweier ebener Bleche (4, 5), daß sie sich in einer Rand an Rand liegenden Beziehung entlang einer Linie treffen, die zur Horizontalen geneigt ist, eine erste ebene Blechanordnung bildet, und die ebenen Bleche (4, 5) durch Normallagenschweißen in einer nach oben verlaufenden Richtung entlang der Linie, an der sie sich treffen, miteinander verschweißt;
(ii) durch derartiges Positionieren zweier weiterer ebener Bleche (14, 15), daß sie sich in einer Rand an Rand liegenden Beziehung entlang einer Linie treffen, die zur Horizontalen geneigt ist, eine zweite ebene Blechanordnung bildet und die weiteren ebenen Bleche durch Normallagenschweißen in einer nach oben verlaufenden Richtung entlang der Linie, an der sie sich treffen, miteinander verschweißt;
(b) jede ebene Blechanordnung zu einer Umfangsgestalt schneidet, die in das strukturelle Muster der kugelförmig gekrümmten Konstruktion paßt, mit Ausnahme einer Toleranz zur Bearbeitung in Schritt (d);
(c) jede ebene Blechanordnung zu einer teilkugelförmigen Konfiguration biegt;
(d) jeweilige Ränder (21, 22) der ersten und der zweiten gebogenen Blechanordnung maschinell zu einem Profil bearbeitet, das sich für das Schweißen in Schritt (f) eignet;
(e) die erste und die zweite gebogene Blechanordnung so positioniert, daß sie sich an ihren maschinell bearbeiteten Rändern (21, 22) entlang einer bogenförmigen Linie treffen, die von einem ersten Ende der Linie aufwärts in Richtung eines zweiten Endes der bogenförmigen Linie verläuft; und
(f) die erste und die zweite gebogene Blechanordnung durch Normallagenschweißen in der Richtung entlang der bogenförmigen Linie von dem ersten Ende der bogenförmigen Linie zu ihrem zweiten Ende miteinander verschweißt, wodurch sich die Schweißstelle entlang der bogenförmigen Linie vorwärtsbewegt, während die Ausrichtung der gebogenen Blechanordnungen so verstellt wird, daß die Tangente zu der bogenförmigen Linie an der Schweißstelle zur Horizontalen geneigt bleibt, während sich die Schweißstelle ändert.

## Revendications

1. Méthode de fabrication d'une structure de tôles métalliques (4, 5), par exemple d'aluminium, soudées ensemble, consistant à supporter deux moyens de tôles métalliques courbés sur une structure de support inclinable (12a), deux bords (21, 22) de tôles des moyens de tôles étant adjacents l'un à l'autre, à définir une rainure de soudage courbe d'inclinaison différente sur sa longueur et à joindre les deux bords de tôles ensemble par soudage impliquant le déplacement d'un dispositif de soudage (17) le long de ladite rainure de soudage, caractérisée en ce que ledit soudage l'un à l'autre des deux bords de tôles est réalisé par soudage descendant qui implique d'incliner la structure de support (12a) pour fournir une inclinaison substantiellement constante de la rainure de soudage courbe dans la position du dispositif de soudage (17) à mesure que ce dernier est déplacé le long de la rainure de soudage.

2. Méthode selon la revendication 1, caractérisée en ce que chaque moyen de tôle est formé en soudant ensemble des côtes métalliques (4, 5) substantiellement planes par soudage descendant en utilisant un moyen de soudage (9, 9a) se déplaçant le long d'une rainure de soudage et en ce que les moyens de tôles sont ensuite courbés suivant une forme courbe avant d'être joints ensemble.

3. Méthode selon la revendication 2, caractérisée en ce que chacun des moyens de tôles (4, 5; 14, 15) est coupé dans une forme souhaitée avant d'être courbé suivant sa forme courbe.

4. Méthode selon la revendication 2 ou 3, caractérisée en ce que ledit soudage descendant desdites tôles l'une à l'autre est effectué par ledit moyen de soudage (9, 9a) monté mobile sur un cadre transversal suspendu (8) d'inclinaison ajustable.

5. Méthode selon l'une quelconque des revendications 2 à 4, caractérisée en ce qu'avant le soudage l'une à l'autre des tôles pour former chaque moyen de tôle, ladite rainure de soudage entre les tôles est nettoyée par brossage.

6. Méthode selon la revendication 5, caractérisée en ce que ledit brossage est effectué par un dispositif de brossage (33) qui se déplace le long de la rainure de soudage devant ledit moyen de soudage (9), de préférence à une distance d'environ un demi-mètre du moyen de soudage.

7. Méthode selon l'une quelconque des revendications 2 à 6, caractérisée en ce qu'après le soudage des tôles ensemble pour former lesdits moyens de tôles, les soudures ainsi créées sont fraisées pour éliminer les cordons de soudure.

8. Méthode selon la revendication 7, caractérisée en ce que le fraisage est effectué par une fraise (36) se déplaçant dans la direction de la soudure derrière le moyen de soudage (9).

9. Méthode selon l'une quelconque des revendications 2 à 8, caractérisée en ce que chaque moyen de tôle (4, 5) est formé par soudage desdites tôles l'une à l'autre en une seule passe d'un côté, en retournant le moyen de tôle et en soudant les tôles en une seule passe de l'autre côté.

10. Méthode selon l'une quelconque des revendications 2 à 9, caractérisée en ce qu'au cours de la formation de chaque moyen de tôle, un dispositif de fixation à succion maintient les tôles et est incliné de telle sorte que la rainure de soudage au niveau du point de soudage soit orientée vers le haut par rapport au plan horizontal à un angle allant de 4° à 7°, de préférence d'environ 5°, dans la direction de soudage.

11. Méthode selon l'une quelconque des revendications précédentes, caractérisée en ce que lesdits bords de tôles (21, 22) sont coupés, par exemple par usinage, avant d'être joints l'un à l'autre pour permettre la formation d'une rainure de soudage précise.

12. Méthode selon l'une quelconque des revendications précédentes, caractérisée en ce que ladite structure de support inclinable (12a) comporte une table inclinable portant les moyens de tôles devant être soudés ensemble et qui est inclinée au cours du soudage de manière à orienter la rainure de soudage entre les bords des tôles en cours de soudage ensemble au niveau du point de soudage suivant une inclinaison vers le haut allant de 4° à 7°, de préférence d'environ 5°, dans la direction du soudage.

13. Méthode selon la revendication 12, caractérisée en ce que les moyens de tôles sont supportés sur la table inclinable par un organe annulaire (29) permettant le support d'un côté convexe ou d'un côté concave des moyens de tôles.

14. Méthode selon la revendication 13, caractérisée en ce qu'une structure de support supplémentaire (30a, 30b) est prévue au centre de l'organe de support annulaire (29) et comporte un moyen pour ajuster sa position en hauteur.

15. Méthode selon l'une quelconque des revendications précédentes, caractérisée en ce qu'avant de joindre les moyens de tôles l'un à l'autre, les bords (21, 22) des moyens de tôles devant être soudés sont finis pour créer lesdits bords de tôles en enlevant la réserve d'usinage à l'aide d'une fraiseuse de formage, qui forme simultanément les bords pour fournir à la fois la surface de pied de la soudure et les côtés de la rainure de soudage.

16. Méthode selon l'une quelconque des revendications 1 à 14, caractérisée en ce que lesdits bords de tôles (21, 22) sont biseautés.

17. Méthode selon l'une quelconque des revendications précédentes, caractérisée en ce que ladite structure est constituée d'une grande citerne sphérique de gaz naturel liquéfié.

18. Méthode de fabrication d'une grande cuve essentiellement sphérique à partir de tôles d'aluminium planes d'une épaisseur allant d'environ 20 mm à environ 70 mm, consistant à:
(a) former au moins un premier et un deuxième assemblages de tôles planes par soudage descendant de tôles planes ensemble (4,5; 14,15) à l'aide d'un dispositif de soudage (9) monté mobile sur un cadre suspendu (8) ayant une inclinaison ajustable;
(b) découper chaque assemblage de tôles planes soudées suivant une forme périphérique qui s'adapte dans le schéma structurel de la cuve, sauf pour une réserve d'usinage dans l'étape (d);
(c) courber chaque assemblage de tôles suivant une configuration partiellement sphérique;
(d) usiner les bords respectifs (21, 22) des premier et deuxième assemblages de tôles courbés suivant un profil approprié au soudage dans l'étape (f);
(e) positionner sur un support inclinable (12a), les premier et deuxième assemblages de tôles courbés pour qu'ils se rejoignent au niveau de leurs bords usinés (21, 22) le long d'une rainure de soudage courbe; et
(f) souder par soudage descendant les premier et deuxième assemblages de tôles courbés l'un à l'autre le long de ladite rainure de soudage tout en ajustant l'orientation des assemblages de tôles courbés en ajustant l'inclinaison du support inclinable (12a) pour fournir un inclinaison substantiellement constante de la rainure de soudage courbe au niveau du soudage à mesure que le soudage avance le long de la rainure de soudage.

19. Méthode de fabrication d'une grande structure sphériquement courbe à partir de tôles d'aluminium planes d'une épaisseur allant d'environ 20 mm à environ 70 mm, consistant à:
(a)
(i) former un premier assemblage de tôles planes en positionnant deux tôles planes (4, 5) de manière à ce qu'elles se rejoignent en relation de bord à bord le long d'une ligne qui est inclinée par rapport à l'horizontale et en soudant par soudage descendant les tôles planes (4, 5) dans une direction vers le haut le long de la ligne à laquelle elles se rencontrent;
(ii) former un deuxième assemblage de tôles planes en positionnant deux autres tôles planes (14, 15) de manière à ce qu'elles se rejoignent en relation de bord à bord le long d'une ligne qui est inclinée par rapport à l'horizontale et en soudant par soudage descendant lesdites autres tôles planes dans une direction vers le haut le long de la ligne à laquelle elles se rencontrent;
(b) découper chaque assemblage de tôles planes suivant une forme périphérique qui s'adapte dans le schéma structurel de la structure sphériquement courbe sauf pour une réserve d'usinage dans l'étape (d);
(c) courber chaque assemblage de tôles planes suivant une configuration partiellement sphérique;
(d) usiner les bords respectifs (21, 22) des premier et deuxième assemblages de tôles courbés suivant un profil approprié au soudage dans l'étape (f);
(e) positionner les premier et deuxième assemblages de tôles courbés de manière à ce qu'ils se rejoignent au niveau de leurs bords usinés (21, 22) le long d'une ligne arquée qui s'étend vers le haut depuis une première extrémité de la ligne dans une direction allant vers une deuxième extrémité de la ligne arquée; et
(f) souder par soudage descendant les premier et deuxième assemblages de tôles courbés l'un à l'autre dans ladite direction le long de la ligne arquée depuis la première extrémité de la ligne arquée jusqu'à la deuxième extrémité de celle-ci, l'emplacement du soudage avançant ainsi le long de la ligne arquée, tout en ajustant l'orientation des assemblages de tôles courbés de telle sorte qu'à mesure que l'emplacement du soudage change, la tangente à la ligne arquée au niveau de l'emplacement du soudage reste inclinée par rapport à l'horizontale.
